(19) Europäisches Patentamt
European Patent Office
Office européen des brevets

(11) Veröffentlichungsnummer: **0 131 245**
**B1**

(12) # EUROPÄISCHE PATENTSCHRIFT

(45) Veröffentlichungstag der Patentschrift:
**04.01.89**

(21) Anmeldenummer: **84107732.4**

(22) Anmeldetag: **04.07.84**

(51) Int. Cl.⁴: **A 01 D 34/70,** A 01 D 43/06, A 01 D 34/48, A 01 D 34/12

(54) **Schliess- und Feststellvorrichtung für einen an einem Schlepper schwenkbar gelagerten Sammelbehälter.**

(30) Priorität: **06.07.83 US 512097**

(43) Veröffentlichungstag der Anmeldung:
**16.01.85 Patentblatt 85/3**

(45) Bekanntmachung des Hinweises auf die Patenterteilung:
**04.01.89 Patentblatt 89/1**

(84) Benannte Vertragsstaaten:
**DE FR GB IT**

(56) Entgegenhaltungen:
**EP-A-0 016 440**
**DE-A-2 952 126**
**US-A-3 317 064**
**US-A-3 816 986**
**US-A-3 974 631**
**US-A-4 015 406**

(73) Patentinhaber: **DEERE & COMPANY, 1 John Deere Road, Moline Illinois 61265 (US)**

(72) Erfinder: **Reilly, Roger David, 1009 North Georgetown Terrace, Beaver Dam Wisconsin 53916 (US)**

(74) Vertreter: **Feldmann, Bernhard, DEERE & COMPANY European Office, Patent Department Steubenstrasse 36- 42 Postfach 503, D-6800 Mannheim 1 (DE)**

EP 0 131 245 B1

## Beschreibung

Die Erfindung bezieht sich auf eine Schließ- und Feststellvorrichtung für einen mit einem Schlepper verbindbaren Sammelbehälter, der an seiner Rückseite eine um eine in seinem oberen Bereich angeordnete Achse zwischen einer Schließstellung und einer Offenstellung schwenkbare Klappe aufweist, die durch eine mittels einer am Sammelbehälter angeordneten Stellvorrichtung betätigbare erste Verriegelungsvorrichtung in Schließstellung haltbar ist, wobei der Sammelbehälter mittels einer zweiten Verriegelungsvorrichtung in seiner Aufnahmestellung festsetzbar und an seiner Unterseite an einem Rahmen schwenkbar gelagert ist.

Es ist bereits ein Sammelbehälter für einen Gartenschlepper bekannt (US-A-4 015 406), der an einem am Gartenschlepper vorgesehenen Rahmen schwenkbar gelagert ist und hierzu im Bereich seiner Oberkante an den Rahmen angelenkt ist. Der Sammelbehälter besteht aus einem in etwa rechteckförmigen Kasten mit einer Auslaßöffnung, über die das Erntegut abgegeben werden kann. In der Erntegutaufnahmestellung ist der Sammelbehälter verschlossen und liegt hierzu gegen die Rückseite des am Gartenschlepper vorgesehenen Rahmens an. Zur Verschwenkung von seiner Erntegutaufnahmestellung in eine Entleerungsstellung ist am Sammelbehälter ein Hebelarm vorgesehen, über den der Sammelbehälter nach oben geschwenkt werden kann, um auf diese Weise die Auslaßöffnung freizugeben und das Erntegut zum Boden zu entleeren. Um den Sammelbehälter in seine Entleerungsposition zu verschwenken, muß das gesamte Gewicht des Sammelbehälters und in der Anfangsphase auch ein Teil des im Sammelbehälter aufgenommenen Erntegutes über den Hebel verschwenkt werden, so daß ein relativ großer Kraftaufwand erforderlich ist. Dadurch kann auch eine bestimmte Größe des Sammelbehälters zur Aufnahme des Erntegutes nicht überschritten werden.

Bei einer bekannten Verriegelungsvorrichtung für einen Sammelbehälter an einem Mähdrescher (US-A-3 317 064) ist der Sammelbehälter auf einem einachsigen Fahrgestell mittels eines Lenkers schwenkbar gelagert und somit zwischen einer Aufnahmestellung und einer Entleerungsstellung verschwenkbar. In der Aufnahmestellung wird das vordere Ende des Sammelbehälters mittels eines aufwendigen Verriegelungsmechanismusses gesichert, der über eine Zugseileinrichtung lösbar ist und bei Betätigung den Sammelbehälter entriegelt, so daß dieser in eine Entleerungsstellung verschwenken kann. Der Sammelbehälter ist hierzu so angeordnet, daß der Schwerpunkt hinter der Drehachse des Sammelbehälters liegt, so daß er infolge seines Eigengewichtes nach hinten schwenken kann. Durch den Druck des austretenden Erntegutes wird die den Sammelbehälter normalerweise verschließende Klappe nach oben geschwenkt, die hierzu an einer Gestängeanordnung angeschlossen ist. Bei Erreichen einer bestimmten Höhe der Klappe wird diese zusätzlich über eine Zugfeder in eine Endlagestellung verschwenkt. Die getrennt zu betätigenden Verriegelungseinrichtungen sind aufgrund der vielen Einzelteile und der aufwendigen Kinematik sehr teuer.

Bei der Schließ- und Feststellvorrichtung (EP-A1-0 016 440), von der die Erfindung ausgeht, ist der Sammelbehälter auf einem Anhänger kippbar angeordnet, wobei das Abkippen über einen Hydraulikzylinder erfolgt. Über einen Seilzug und ein Schwenkgestänge wird beim Abkippen die den Sammelbehälter in seiner Betriebsstellung verschließende Klappe automatisch geöffnet. Obwohl nicht beschrieben, ist anzunehmen, daß die Klappe in ihrer Schließstellung verriegelbar ist. Diese Verriegelung dürfte jedoch nicht mit dem Mechanismus zum Verschwenken der Klappe in Wirkverbindung stehen und müßte vor dem Betätigen des Hydraulikzylinders manuell gelöst werden. Dieses Dokument offenbart außerdem einen nicht kippbaren Sammelbehälter auf einem Anhänger, dessen verriegelbare Klappe über einen Handhebel vom Zugfahrzeug geöffnet werden kann. Der Sammelbehälter weist eine geneigte Bodenwand auf, so daß das Gut aus dem Sammelbehälter bei geöffneter Klappe herausrutschen kann. Ferner ist in diesem Dokument noch ein auf einem Kleintransporter aufgesattelter Sammelbehälter gezeigt, wobei Ausführungen zum Entleeren oder Entriegeln nicht gemacht sind.

Der Erfindung liegt die Aufgabe zugrunde, die Schließ- und Feststellvorrichtung derart auszubilden und anzuordnen, daß sie einmal zur Verschwenkung des Sammelbehälters eingesetzt und gleichzeitig zur gemeinsamen Betätigung der beiden Verriegelungsvorrichtungen für die Klappe und den Sammelbehälter benutzt werden kann. Diese Aufgabe ist dadurch gelöst, daß die Stellvorrichtung als am Sammelbehälter schwenkbar gelagerter Hebel ausgebildet ist, der zur Verschwenkung des Sammelbehälters dient und gleichzeitig über Gestänge mit einer am Sammelbehälter schwenkbar gelagerten Klinke zum Arretieren des Sammelbehälters in der Erntegutaufnahmestellung und mit einem als Verriegelungslasche ausgebildeten Schließteil zum Festsetzen der Klappe ebenfalls in der Erntegutaufnahmestellung verbunden ist. Da die Klappe an der Rückseite des Sammelbehälters, und zwar im oberen Bereich, angelenkt ist und der Sammelbehälter an seiner Unterseite am Rahmen des Schleppers schwenkbar lagert, läßt sich die Schließ- und Fest-Stellvorrichtung gleichzeitig zur Verschwenkung des Sammelbehälters nutzen und auch zur Betätigung der beiden Verriegelungsvorrichtungen einsetzen. Durch die vorteilhafte Lagerung des Sammelbehälters läßt sich dieser ohne weiteres bodenwärts kippen, indem er lediglich nach hinten gedrückt wird. Hierdurch wird gleichzeitig die Verriegelungsvorrichtung für die Klappe gelöst, und die Klappe schwenkt infolge ihres Eigengewichtes nach hinten und behält dabei ihre vertikale Lage bei, während der Sammelbehälter eine geneigt verlaufende Position einnimmt. Somit erhält man mit wenigen baulichen Mitteln eine kostengünstige Stellvorrichtung, mit der drei Funktionen erfüllt werden können. Da die Stellvorrichtung als Hebel ausgebildet ist, lassen sich mit geringem Kraftaufwand beide Verriegelungsvorrichtungen betätigen. Hinzu kommt, daß beim Zurückschwenken des Sammelbehälters die Klappe lediglich infolge ihres Eigengewichtes automatisch in ihre Schließstellung gelangt und die Öffnung des Sammelbehälters wieder vollständig verschließt. Durch den Hebel lassen sich dann in der Aufnahmestellung des Sammelbehälters die Klinke und die Verriegelungslasche ohne weiteres in ihre Arretierungsstellung zurück verschwenken und somit den Sammelbehälter und die Klappe in dieser Stellung festlegen.

Nach einem weiteren Vorschlag der Erfindung kann die Vorrichtung einen Rahmen aufweisen, der an einem Schlepper freitragend angeordnet ist, die Klinke mit einer Lasche am Rahmen in Eingriff bringbar sein und die Verriegelungslasche gemeinsam mit der Klinke in mindestens zwei Stellungen verstellbar sein, wobei in der einen die Verriegelungslasche in der Schließstellung gehalten wird und in der anderen eine Verschwenkung der Klappe in die Offenstellung möglich ist, wobei die Klappe im Bereich ihrer unteren Kante über die Verriegelungslasche arretierbar ist.

Vorteilhaft ist es ferner, daß der Hebel über eine Spielverbindung mit der Klinke beweglich verbunden ist und über ein unterhalb des Sammelbehälters in Führungselementen aufgenommenes Gestänge mit der Verriegelungsvorrichtung gelenkig verbunden ist, die über eine über den Hebel spannbare Feder in Schließstellung gehalten wird. Auf diese Weise kann der Sammelbehälter auch dann in seiner Betriebsstellung verriegelt werden, wenn sich zwischen Klappe und Behälterwänden noch festgesetztes Gut befindet, wobei die Klappe über die Federn in Richtung auf ihre Schließstellung gezogen wird. Dadurch, daß der Sammelbehälter an dem vom Schlepper nach rückwärts ragenden Rahmen derart schwenkbar gelagert ist, daß der Massenmittelpunkt des Sammelbehälters in der Erntegutaufnahmestellung zwischen der Anlenkstelle des Sammelbehälters am Rahmen und der Rückseite des Schleppers liegt, wird der Sammelbehälter in seiner Erntegutaufnahmestellung gehalten, auch wenn die Verriegelung des Sammelbehälters noch nicht erfolgt ist. Da der vertikale Abstand des Massenmittelpunktes des Sammelbehälters zur Anlenkstelle des Sammelbehälters auf dem Rahmen relativ klein ist, genügt ein geringer Kraftbedarf, um den Sammelbehälter nach hinten zu verschwenken und somit den Massenmittelpunkt des Sammelbehälters hinter die Anlenkstelle zu bringen. Hierdurch kann die Bedienungsperson den Sammelbehälter auch im gefüllten Zustand sehr leicht verstellen, da bereits nach einem geringen Stellweg das Eigengewicht des Sammelbehälters als Hebelarm mit Bezug auf die Anlenkstelle des Sammelbehälters wirkt und den Sammelbehälter nach hinten zieht.

In weiterer Ausgestaltung der Erfindung wird vorgeschlagen, daß an dem am Sammelbehälter in dessen oberen Bereich angeschlossenen Hebel das obere Ende eines vertikal verlaufenden Gestänges angreift, das in seinem unteren Bereich einen Führungsbolzen aufweist, der in einer länglichen Öffnung in der Klinke verschiebbar aufgenommen ist, wobei das untere Ende des Gestänges an das unterhalb des Sammelbehälters horizontal verlaufende Gestänge angeschlossen ist. Hierdurch wird erreicht, daß die Klappe bereits entriegelt wird, wenn der Sammelbehälter in Betriebsstellung noch verriegelt ist.

Vorteilhaft ist es ferner, daß das untere Ende des Gestänges an einem am Sammelbehälter gelagerten Hebelgestänge angreift, das einen Gelenkbolzen aufweist, der in einem Längsschlitz im horizontal verlaufenden Gestänge verschiebbar aufgenommen ist, wobei die Verriegelungsvorrichtung abgewinkelte Schenkel aufweist, die einenends mit dem horizontal verlaufenden Gestänge gelenkig verbunden sind und anderenends an der Verriegelungslasche angreifen.

Das Ver- und Entriegeln der Klappe kann in einfacher Weise in Abhängigkeit der Bewegung des Gestänges dann durchgeführt werden, wenn unterhalb des Bodens des Sammelbehälters mindestens ein Führungselement angeordnet ist, auf dem der vordere an das horizontale Gestänge angeschlossene Teil der Schenkel der Verriegelungsvorrichtung derart geführt ist, daß in der die Klappe arretierenden Stellung der andere Teil der Schenkel der Verriegelungsvorrichtung an die Unterseite des Sammelbehälters heranschwenkbar und die Verriegelungslasche gegen die Klappe zur Anlage bringbar ist. Somit bewirkt das Führungselement eine Führung der abgewinkelten Schenkel derart, daß bei der Rückwärtsbewegung des Gestänges die Schenkel mit der Verriegelungslasche um ihre Anlenkstelle nach rückwärts und unten klappen und dabei die Klappe freigeben.

Da der Sammelbehälter nach einem anfänglichen leichten Schwenken selbsttätig in seine Entleerungsstellung kippt, kann, um die Bedienungsperson zu schonen, erfindungsgemäß vorgesehen werden, daß zwischen dem Rahmen und dem Sammelbehälter ein Dämpfungsglied angeordnet ist. Zweckmäßig kann die Klinke einen nach oben offenen Haken aufweisen, der in die am Rahmen vorgesehene Lasche einrastbar ist.

Im folgenden wird die Erfindung anhand von lediglich einen Ausführungsweg darstellenden Zeichnungen näher erläutert. Es zeigt:

Fig. 1 einen Schlepper für die Rasenpflege mit einer Mähwerksvorrichtung und angebautem Sammelbehälter in Seitenansicht,
Fig. 2 eine Ansicht nach der Linie 2 - 2 gemäß Fig. 1,
Fig. 3 den Sammelbehälter in seiner Betriebsstellung,
Fig. 4 den Sammelbehälter in seiner Entleerungsstellung,
Fig. 5 eine Ansicht nach der Linie 5 - 5 gemäß Fig. 3.

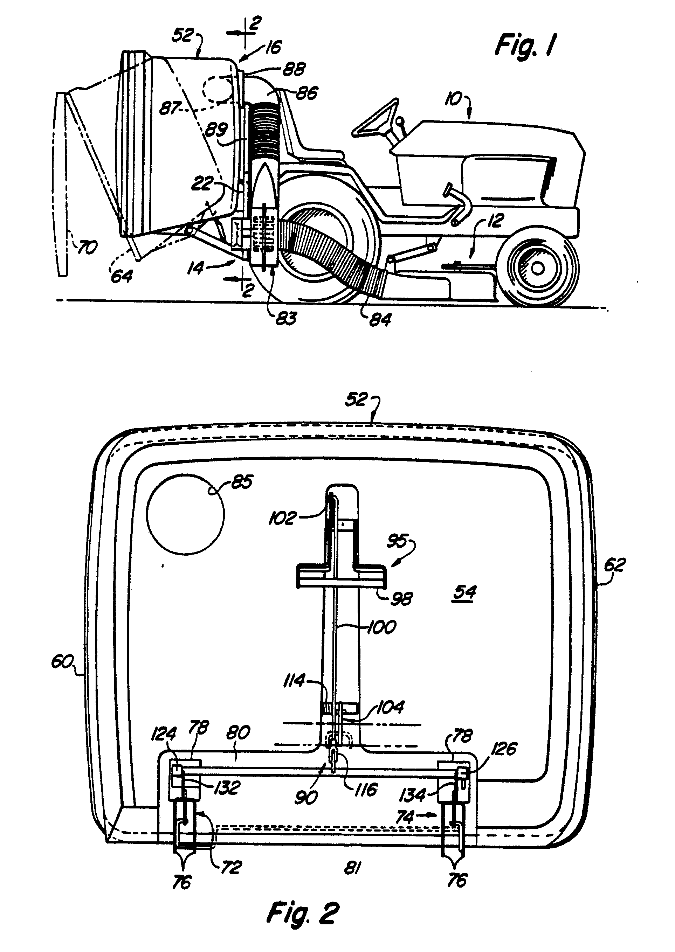

In der Zeichnung ist mit 10 ein Schlepper für die Rasenpflege bezeichnet, der mit einer Schneidwerksvorrichtung 12 und einem Rahmen 14 ausgerüstet ist, der lösbar an der Rückseite des Schleppers angeschlossen ist und einen Sammelbehälter 16 aufweist. Der Rahmen 14 weist einen oberen und einen unteren Querträger 18 und 20 auf, die durch vertikal verlaufende rechte und linke und einen mittleren Träger 22, 24 und 26 miteinander verbunden sind. Obere und untere in der Zeichnung nicht dargestellte Laschen sind an die Stirnseiten der Träger 24 und 26 angeschlossen bzw. angeschweißt, wobei die nach vorne in Fahrtrichtung zeigenden Laschen über Kupplungsbolzen mit der Rückseite des Schleppers lösbar verbunden sind. Eine nach hinten gerichtete, freitragende, winkelförmige Strebe 36 ist mit ihrem unteren Ende an den Träger 24 und den unteren Querträger 20 angeschlossen und nimmt an ihrem freien bzw. hinteren Ende eine Buchse 38 auf. Eine zweite ebenfalls freitragend angeordnete Strebe 40 läuft parallel zur Strebe 38 und besteht aus einer geformten bzw. gebogenen Platte mit einem trapezförmig ausgebildeten und vertikal verlaufenden Teil 42, der frontseitig in einen vertikal verlaufenden Flansch 44 endet, der über Schraubenbolzen an den linken Träger 24 angeschlossen ist. Ein nach hinten geneigt verlaufender Flansch 46 ist an die obere Kante des Teils 42 angeschlossen und erstreckt sich in etwa bis zum hinteren Ende der Strebe 40. Ein weiterer Flansch 47 erstreckt sich nach hinten und oben und ist mit der unteren Kante des Teils 42 verbunden. Der Flansch 47 weist an seinem unteren Ende einen vertikal verlaufenden Flanschteil auf, der über einen Schraubenbolzen mit dem Querträger 20 verbunden ist. Eine zweite Buchse 48 ist an das hintere Ende des Teils 42 angeschlossen und verläuft koaxial zur Buchse 38. Eine Lasche 50 zum Festsetzen des Sammelbehälters 16 besteht aus einer U-förmig ausgebildeten Stange, mit mit ihren Schenkeln an die Unterseite des Querträgers 18 zwischen dem Träger 24 und 26 angeschlossen ist, wobei die nach oben geneigt verlaufenden Teile der Schenkel über einen Steg miteinander verbunden sind.
Der Sammelbehälter 16 besteht aus einem Gehäuseteil 52 aus Plastikmaterial und ist aus einer Vorderseite 54, einer oberen Wand 56, einem Boden 58 sowie rechten und linken Seitenwänden 60 und 62 gebildet. Die obere Wand, der Boden und die gegenüberliegenden Seitenwände bilden gemeinsam eine Öffnung 64 an der Rückseite des Sammelbehälters 16. Nahe der Öffnung 64 befindet sich eine ganz um den Sammelbehälter 16 umlaufende Ringnut 66, in der ein rohrförmiges Metallband 68 zur Versteifung des Sammelbehälters 16 eingelassen ist. Die Öffnung 64 wird über eine vertikal verlaufende, schwenkbar am Sammelbehälter 16 angeschlossene Klappe 70 verschlossen, die hierzu über in der Zeichnung nicht dargestellte Scharniere mit der oberen Wand verbunden ist und von einer den Sammelbehälter 16 verschließenden Stellung (Fig. 1) in eine die Öffnung freigebende Stellung (siehe gestrichelte Linien in Fig. 1) verschwenkbar ist.

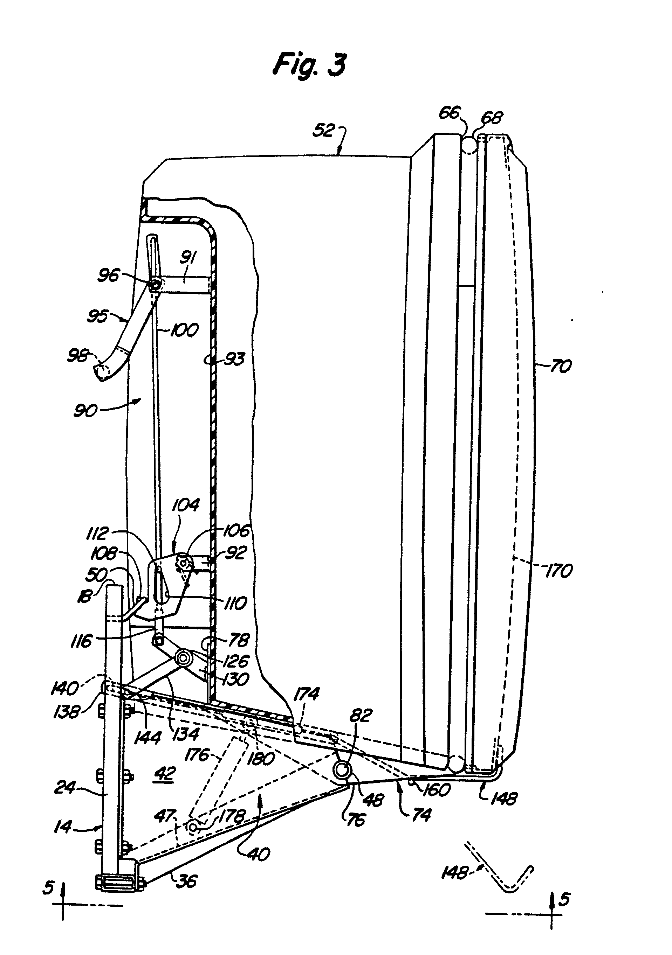

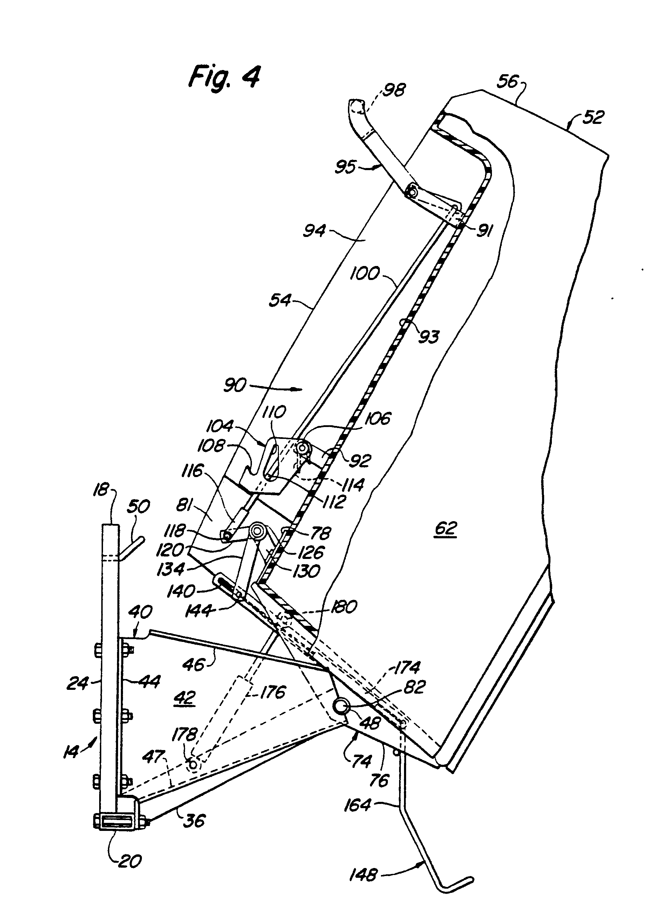

Der Gehäuseteil 52 wird von dem Rahmen 14 mittels rechter und linker Halterungen 72 und 74 aufgenommen. Eine jede Halterung 72 und 74 besteht aus einem Kanalteil, der aus zwei vertikal verlaufenden Flanschen 76, die, wie aus Fig. 3 hervorgeht, in der Seitenansicht dreieckförmig ausgebildet sind, und aus einem Stegteil gebildet ist, der flach gegen die Unterseite des Bodens 58 des Sammelbehälters 16 anliegt. An jeden Stegteil der beiden Flansche 76 ist eine in etwa vertikal verlaufende Halterung 78 (siehe Fig. 3 und 4) angeschlossen, die mit einem Wandteil 80 in einer Ausnehmung 81 befestigt ist, die im unteren vorderen Bereich der Vorderseite 54 des Sammelbehälters 16 vorgesehen ist.

In den Flanschen 76 sind untereinander fluchtende Bohrungen vorgesehen, die etwas hinter der vertikal verlaufenden Ebene vorgesehen sind, die durch den Massenmittelpunkt des Sammelbehälters 16 verläuft, wenn sich dieser in einer vertikal verlaufenden Stellung gemäß Fig. 3 befindet. Die Streben 36 und 40 befinden sich außerhalb der Halterungen 72 und 74, und ein Gestänge bzw. eine Achse 82 ist in den entsprechenden in den Halterungen 72 und 74 vorgesehenen Bohrungen und in den Buchsen 38 und 48 aufgenommen, die an den Streben 36 und 40 angeordnet sind. Somit läßt sich der Sammelbehälter 16 beispielsweise aus der Stellung gemäß Fig. 3 in eine Stellung gemäß Fig. 4 verschwenken, in der das Erntegut über die Öffnung 64 treten kann.

Der Sammelbehälter 16 wird über ein Gebläse 83 befüllt, das am rechten Ende des Rahmens 14 vorgesehen ist und dessen Einlaßöffnung mit dem Auslaß eines Förderkanals 84 in Verbindung steht, der an das Gehäuse der Schneidwerksvorrichtung 12 angeschlossen ist. Ein Auslaßkanal 86 steht über einen oberen Krümmer 87 mit einer im oberen Teil des Sammelbehälters 16 vorgesehenen Einlaßöffnung 85 in Verbindung. Die Einlaßöffnung 85 ist so ausgebildet und angeordnet, daß der Sammelbehälter 16 in die in gestrichelten Linien dargestellte Entleerungsstellung verschwenkt werden kann, ohne daß eine Beeinträchtigung an den einzelnen Kanälen des Gebläses 83 auftritt. Eine Ringdichtung 88, beispielsweise aus Weichgummi, ist auf dem Auslaßkanal 86 vorgesehen, so daß der Auslaßkanal gegenüber der Einlaßöffnung 85 einwandfrei abgedichtet werden kann. Eine Halterung 89 ist in das obere Ende des rechten Trägers 22 des Rahmens 14 eingesteckt, und an das obere Ende der Halterung 89 ist das hintere Ende des Krümmers 87 des Auslaßkanals 86 angeschlossen, so daß dieser zusätzlich abgestützt ist.

Das Gebläse 83 wird über eine in der Zeichnung nicht dargestellte Antriebsvorrichtung des Schleppers 10 angetrieben. Das gleiche gilt auch für die Schneidwerkskörper der Schneidwerksvorrichtung 12, über die das Erntegut abgetrennt und über das Gebläse 83 dem Sammelbehälter 16 zugeführt wird.

Eine Verriegelungsvorrichtung 90 dient zum Halten des Sammelbehälters 16 in seiner Füllstellung und zum Verschließen der Klappe 70 in ihrer Stellung gemäß Fig. 3 (Schließstellung). Die Verriegelungsvorrichtung 90 weist obere und untere Halterungen 91 und 92 auf, die mit ihren Schenkeln an eine Außenseite 93 einer Einbuchtung 94 im Sammelbehälter 16 angeschlossen sind. Die Einbuchtung 94 erstreckt sich vertikal zwischen der oberen Wand 56 und der Ausnehmung 81, die ebenfalls an der Vorderwand des Sammelbehälters 16 vorgesehen ist. Die Einbuchtung 94 dient zur Aufnahme der Verriegelungsvorrichtung 90 und weist den Vorteil auf, den Sammelbehälter 16 näher an den Schlepper 10 anzubauen, so daß das Gewicht des Sammelbehälters mit Bezug auf den Schlepper 10 mehr nach vorne verlagert wird und somit entsprechende Gegengewichte an der Stirnseite des Schleppers vermieden bzw. gering gehalten werden können. Die obere Halterung 91 befindet sich etwa in Schulterhöhe einer Bedienungsperson von durchschnittlicher Größe, wenn diese auf dem Schlepper 10 Platz genommen hat, und weist einen zweiarmigen Hebel 95 auf, der mittels eines Gelenkbolzens 96 an die Halterung 91 angeschlossen ist. An dem äußeren freien Ende des einen Hebelarms des Hebels 95 befindet sich eine seitlich herausstehende Stellvorrichtung 98, und der andere Hebelarm erstreckt sich in Richtung der Einbuchtung 94. An das äußere Ende des anderen Hebelarms des Hebels 95 ist ein Gestänge 100 angeschlossen, das hierzu an seinem oberen Ende mit einem rechtwinklig ausgebildeten Ende 102 versehen ist, das an dem Hebel 95 gelenkig angreift. Eine Klinke 104 ist mit der unteren Halterung 92 über einen Bolzen 106 gelenkig verbunden und weist einen nach oben offenen Haken 108 auf, der in die Öffnung der Lasche 50 einrastbar ist und hierzu über das Gestänge 100 entsprechend verstellt werden kann. In der Klinke 104 ist eine tropfenförmige Öffnung 110 vorgesehen, die Teil einer Spielverbindung ist und zur Aufnahme eines mit dem Gestänge 100 verbundenen Führungsbolzens 112 dient.

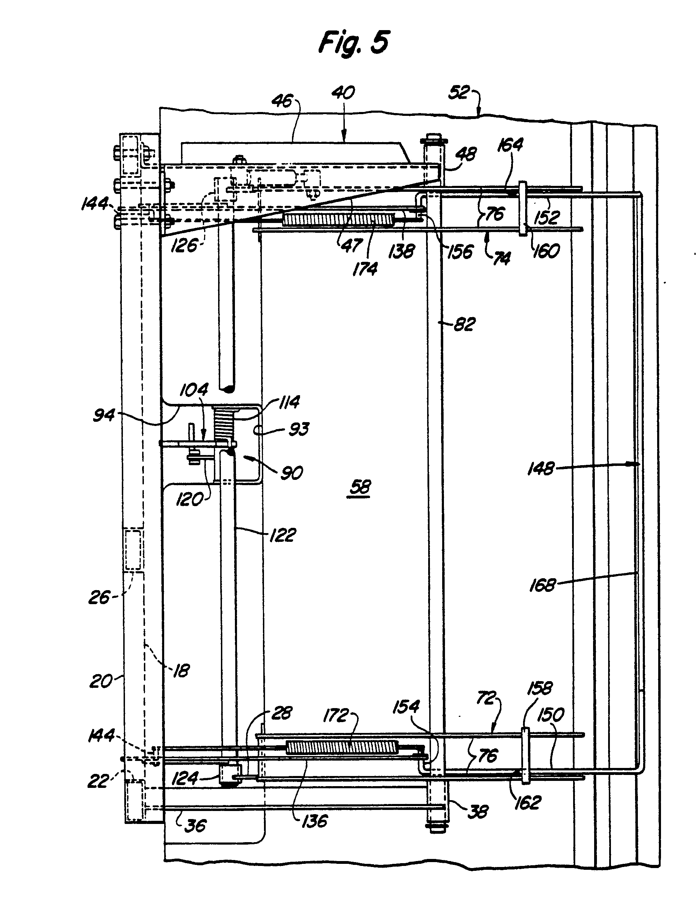

Befindet sich der Hebel 95 in seiner in Fig. 3 dargestellten Verriegelungsstellung, so befindet sich der Führungsbolzen 112 am oberen Ende der Öffnung 110. Die Klinke 104 wird über eine Feder 114 im Uhrzeigerdrehsinn vorgespannt. Das Gestänge 100 erstreckt sich über den Führungsbolzen 112 nach unten und weist eine Anschlußöse 116 auf, die auf das untere Ende des Gestänges 100 aufgeschraubt ist und über einen Gelenkbolzen 118 an einen Hebelarm 120 gelenkig angeschlossen ist, der an eine Achse 122 angeschlossen ist, deren beide Enden in Buchsen 124 und 126 aufgenommen sind. Die Buchsen 124 und 126 sind in sich nach vorne erstreckenden Halterungen 128 und 130 aufgenommen, die mit ihren hinteren Enden an die Halterungen 78 angeschlossen sind. Innerhalb der Ausnehmung 81 sind auf der Achse 122 endseitig untereinander fluchtende Hebel 132 und 134 angeordnet, die mit entsprechenden Gestängen 136 und 138 verbunden sind. Die Hebel 132 und 134 und die Gestänge 136 und 138 liegen innerhalb der einen Gehäusekanal bildenden Schenkel der Halterungen 72 und 74. Das vordere Ende eines jeden Gestänges 136 und 138 weist einen Längsschlitz 140 auf, der zur Aufnahme eines Gelenkbolzens 144 dient und der die Gestänge 136 und 138 mit den entsprechenden Hebeln 132 und 134 verbindet. Eine U-förmig ausgebildete Verriegelungsvorrichtung 148 besteht aus einer Stange mit rechten und linken Schenkeln 150 und 152, die frontseitig abgewinkelte Enden 154 und 156 (Fig. 5) aufweisen, die gelenkig an die Gestänge 136 und 138 angeschlossen sind. Die Schenkel 150 und 152 liegen auf Führungselementen 158 und 160 auf, die aus relativ kurzen auf die Unterkanten der Flansche 76 angeschweißten Trägern bestehen und hinter der Achse 82 liegen. Die Schenkel 150 und 152 sind bei 162 und 164 unmittelbar vor den Führungselementen 158 und 160 abgebogen (siehe Fig. 4), wenn der Hebel 95 die in Fig. 3 in ausgezogenen Linien dargestellte Stellung einnimmt, so daß sich dann die Schenkel der Verriegelungsvorrichtung 148 von ihren vorderen Enden nach hinten und unten bis zu den Stellen 162, 164 erstrecken und von dort aus in horizontaler Richtung bis zu einer Verriegelungslasche 168, die gegen die Rückseite 170 der Klappe 70 anliegt, wobei die Anlagestelle etwas oberhalb der Schenkel der Verriegelungsvorrichtung 148 liegt. Je eine Feder 172, 174 befindet sich seitlich der Gestänge 136 und 138 und ist einenends an das jeweilige Ende 154, 156 und anderenends an den entsprechenden Gelenkbolzen 144 angeschlossen, der in dem als Spielverbindung ausgebildeten Längsschlitz 140 aufgenommen ist. Somit werden die Gestänge 136 und 138 und die Verriegelungsvorrichtung 148 nach vorne gezogen und die Klappe 70 in ihrer Schließstellung gehalten. Die Längsschlitze 140 erlauben ein Feststellen der Klappe auch dann, wenn sich noch etwas Erntegut in dem Spalt zwischen der Rückseite des Sammelbehälters 16 und der Klappe 70 befinden sollte, das ein vollständiges Verschließen der Klappe verhindert.

Soll die Klappe 70 zum Entleeren des Erntegutes aus dem Sammelbehälter 16 geöffnet werden, so muß der Hebel 95 von seiner Verriegelungsstellung in eine Entriegelungsstellung verschwenkt werden (siehe Fig. 4). Hierdurch wird das Gestänge 100 nach unten bewegt und eine Verschwenkung der Achse 122 im entgegengesetzten Uhrzeigerdrehsinn herbeigeführt (mit Bezug auf Fig. 4). Die anfängliche Abwärtsverstellung des Gestänges 100 behindert nicht die Klinke 104, da der Führungsbolzen 112 sich zwischen der oberen und unteren Begrenzung der Öffnung 110 befindet. Die Drehung der Achse 122 im entgegengesetzten Uhrzeigerdrehsinn bewirkt über die Gelenkbolzen 144 eine Verstellung der Gestänge 136 und 138 sowie der Verriegelungsvorrichtung 148 nach hinten. Durch die Stellung der Verriegelungsvorrichtung 148 nach hinten werden die Schenkel 150 und 152 nach unten und hinten über die Führungselemente 158 und 160 bewegt, und die Verriegelungslasche 168 wird ebenfalls nach unten und hinten bewegt, um somit die Klappe 70 freizugeben. Nähert sich der Hebel 95 der Stellung, in der der Sammelbehälter 16 entleert werden kann, so kommt der Führungsbolzen 112 gegen die untere Begrenzung der Öffnung 110 zur Anlage und schwenkt dadurch die Klinke 104 im entgegengesetzten Uhrzeigerdrehsinn um den Bolzen 106. In diesem Augenblick kann die Bedienungsperson die Stellvorrichtung 98 nach vorne ziehen, so daß der Haken 108 leicht aus der Lasche 50 austritt. Hat der Hebel 95 seine Entriegelungsstellung erreicht, so wird durch weiteres Anheben des Hebels der Sammelbehälter leicht nach hinten geschwenkt, so daß der Schwerpunkt des Sammelbehälters sich mit Bezug auf die Achse 82 des Sammelbehälters nach hinten verlagert und der Sammelbehälter 16 dann ohne zusätzliche Hilfe der Bedienungsperson in seine endgültige Entleerungsstellung verschwenken kann. Um jedoch zu verhindern, daß die Bedienungsperson aufgrund der Bewegung des vollen Sammelbehälters, wenn dieser sich über seinen Schwerpunkt hinaus bewegt, einen Schlag bekommt, ist ein Dämpfungsglied 176, beispielsweise ein Hydraulikzylinder, vorgesehen, der einenends über einen Gelenkbolzen 178 an den Teil 42 und anderenends über einen Gelenkbolzen 180 an die Halterung 74 angeschlossen ist.

**Patentansprüche**

1. Schließ- und Feststellvorrichtung für einen mit einem Schlepper (10) verbindbaren Sammelbehälter (16), der an seiner Rückseite eine um eine in seinem oberen Bereich angeordnete Achse zwischen einer Schließstellung und einer Offenstellung schwenkbare Klappe (70) aufweist, die durch eine mittels einer am Sammelbehälter (16) angeordneten Stellvorrichtung (98) betätigbare erste Verriegelungsvorrichtung (148) in Schließstellung haltbar ist, wobei der Sammelbehälter (16) mittels einer zweiten Verriegelungsvorrichtung in seiner Aufnahmestellung festsetzbar und an seiner Unterseite an einem Rahmen (14) schwenkbar gelagert ist, dadurch gekennzeichnet, daß die Stellvorrichtung (98) als am Sammelbehälter (16) schwenkbar gelagerter Hebel (95) ausgebildet ist, der zur Verschwenkung des Sammelbehälters (16) dient und gleichzeitig über Gestänge (100, 136, 138) mit einer am Sammelbehälter (16) schwenkbar gelagerten Klinke (104) zum Arretieren des Sammelbehälters (16) in der Erntegutaufnahmestellung und mit einem als Verriegelungslasche (168) ausgebildeten Schließteil zum Festsetzen der Klappe (70) ebenfalls in der Erntegutaufnahmestellung verbunden ist.

2. Vorrichtung nach Anspruch 1, dadurch gekennzeichnet, daß sie einen Rahmen (42) aufweist, der an einem Schlepper (10) freitragend angeordnet ist, daß die Klinke (104) mit einer Lasche (50) am Rahmen (14) in Eingriff bringbar ist und daß die Verriegelungslasche (168) gemeinsam mit der Klinke (104) in mindestens zwei Stellungen verstellbar ist, wobei in der einen die Verriegelungslasche (168) in der Schließstellung gehalten wird und in der anderen eine Verschwenkung der Klappe (70) in die Offenstellung möglich ist.

3. Vorrichtung nach Anspruch 1 oder 2, dadurch gekennzeichnet, daß die Klappe (70) im Bereich ihrer unteren Kante über die Verriegelungslasche (168) arretierbar ist.

4. Vorrichtung nach einem oder mehreren der vorhergehenden Ansprüche, dadurch gekennzeichnet, daß der Hebel (95) über eine Spielverbindung mit der Klinke (104) beweglich verbunden ist und über ein unterhalb des Sammelbehälters (16) in Führungselementen (158) aufgenommenes Gestänge (136, 138) mit der Verriegelungsvorrichtung (148) gelenkig verbunden ist, die über eine über den Hebel (95) spannbare Feder (174, 172) in Schließstellung gehalten wird.

5. Vorrichtung nach einem oder mehreren der vorhergehenden Ansprüche, dadurch gekennzeichnet, daß der Sammelbehälter (16) an dem vom Schlepper (10) nach rückwärts ragenden Rahmen (14) derart schwenkbar gelagert ist, daß der Massenmittelpunkt des Sammelbehälters (16) in der Erntegutaufnahmestellung zwischen der Anlenkstelle des Sammelbehälters (16) am Rahmen (14) und der Rückseite des Schleppers (10) liegt.

6. Vorrichtung nach einem oder mehreren der vorhergehenden Ansprüche, dadurch gekennzeichnet, daß an dem am Sammelbehälter (16) in dessen oberen Bereich angeschlossenen Hebel (95) das obere Ende eines vertikal verlaufenden Gestänges (100) angreift, das in seinem unteren Bereich einen Führungsbolzen (112) aufweist, der in einer länglichen Öffnung (110) in der Klinke (104) verschiebbar aufgenommen ist, wobei das untere Ende des Gestänges (100) an das unterhalb des Sammelbehälters (16) horizontal verlaufende Gestänge (136) angeschlossen ist.

7. Vorrichtung nach einem oder mehreren der vorhergehenden Ansprüche, dadurch gekennzeichnet, daß das untere Ende des Gestänges (100) an einem am Sammelbehälter (16) gelagerten Hebelgestänge (120, 122, 134) angreift, das einen Gelenkbolzen (144) aufweist, der in einem Längsschlitz (140) im horizontal verlaufenden Gestänge (136) verschiebbar aufgenommen ist.

8. Vorrichtung nach einem oder mehreren der vorhergehenden Ansprüche, dadurch gekennzeichnet, daß die Verriegelungsvorrichtung (148) abgewinkelte Schenkel (150, 152) aufweist, die einenends mit dem horizontal verlaufenden Gestänge (136, 138) gelenkig verbunden sind und anderenends an der Verriegelungslasche (168) angreifen.

9. Vorrichtung nach Anspruch 8, dadurch gekennzeichnet, daß unterhalb des Bodens des Sammelbehälters (16) mindestens ein Führungselement (158, 160) angeordnet ist, auf dem der vordere an das horizontale Gestänge (136, 138) angeschlossene Teil der Schenkel (150, 152) der Verriegelungsvorrichtung (148) derart geführt ist, daß in der die Klappe (70) arretierenden Stellung der andere Teil der Schenkel der Verriegelungsvorrichtung (148) an die Unterseite des Sammelbehälters (16) heranschwenkbar und die Verriegelungslasche (168) gegen die Klappe (70) zur Anlage bringbar ist.

10. Vorrichtung nach einem oder mehreren der vorhergehenden Ansprüche, dadurch gekennzeichnet, daß zwischen dem Rahmen (42) und dem Sammelbehälter (16) ein Dämpfungsglied (176) angeordnet ist.

11. Vorrichtung nach einem oder mehreren der vorhergehenden Ansprüche, dadurch gekennzeichnet, daß die Klinke (104) einen nach oben offenen Haken (108) aufweist, der in die am Rahmen (42) vorgesehene Lasche (50) einrastbar ist.

## Claims

1. A closing and fastening device for a collecting container (16) which can be connected to a tractor (10) and which at its rear has a flap (70) which is pivotable about an axis arranged in its upper region between a closed position and an open position and which can he held in the closed position by a first locking device (148) which can he actuated by means of a control device (98) arranged on the collecting container (16), wherein the collecting container (16) can he fastened by means of a second locking device in its receiving position and is mounted pivotably at its underside on a frame (14) characterised in that the control device (98) is in the form of a lever (95) wich is mounted pivotably on the collecting container (16) and which serves for pivotal movement of the collecting container (16) and which at the same time is connected by way of links (100, 136, 138) to a latch (104) which is mounted pivotably on the collecting container (16) for arresting the collecting container (16) in the crop material receiving position, and to a closure portion which is in the form of a locking her (168) for fastening the flap (170) also in the crop material receiving position.

2. A device according to claim 1 characterised in that it has a frame (42) which is arranged in cantilever relationship on a tractor (10), that the latch (104) can he brought into engagement with a her (50) on the frame (14) and that the locking her (168) together with the latch (104) can he put into at least two positions wherein in one position the locking her (168) is held in the closure position and in the other position pivotal movement of the flap (70) into the open position is possible.

3. A device according to claim 1 or claim 2 characterised in that the flap (70) can he arrested in the region of its lower edge by way of the locking her (168).

4. A device according to one or are of the preceding claims characterised in that the lever (95) is movably connected to the latch (104) by way of a connection with play therein and is pivotally connected to the locking device (148) by way of a linkage (136, 138) which is accommodated beneath the collecting container (16) in guide elements (158), the locking device (148) being held in the closed position by way of a spring (174, 172) which can he tensioned by way of the lever (95).

5. A device according to one or more of the preceding claims characterised in that the collecting container (16) is pivotably mounted on the frame (14) which projects regardly from the tractor (10), in such a way that the centre of mass of the collecting container (16) in the crop material receiving position is between the pivotal mounting of the collecting container (16) to the frame (14) and the rear of the tractor (10).

6. A device according to one or more of the preceding claims characterised in that the lever (95) which is connected to the collecting container (16) in the upper region thereof is engaged by the upper end of a vertically extending linkage (100) which in its lower region has a guide pin (112) which is slidably accomodated in an elongate opening (110) in the latch (104), wherein the lower end of the linkage (100) is connected to the linkage (136) extending horizontally beneath the collecting container (16).

7. A device according to one or more of the preceding claims characterised in that the lower end of the linkage (100) engages a lever linkage (120, 122, 134) which is mounted on the collecting container (16) and which has a pivot pin (144) which is slidably accomodated in a longitudinal slot (140) in the horizontally extending linkage (136).

8. A device according to one or more of the preceding claims characterised in that the locking device (148) has bent-over limbs (150, 152) which at one end are pivotally connected to the horizontally extending linkage (136, 138) and at the other end engage the locking bar (168).

9. A device according to claim 8 characterised in that disposed beneath the bottom of the collecting container (16) is at least one guide element (158, 160) on which the front part, which is connected to the horizontal linkage (136, 138), of the limbs (150, 152) of the locking device (148) is guided in such a way that in the position of arresting the flap (70), the other part of the limbs of the locking device (148) can he pivoted towards the underside of the collecting container (16) and the locking bar (168) can be brought into contact against the flap (70).

10. A device according to one or more of the preceding claims characterised in that a damping member (176) is arranged between the frame (42) and the collecting container (16).

11. A device according to one or more of the preceding claims characterised in that the latch (104) has an upwardly open hook (108) which can he engaged into the her (50) provided on the frame (42).

**Revendications**

1. Dispositif de fermeture et de blocage pour un réceptacle collecteur (16) pouvant être relié à un tracteur (10), qui comporte à sa face postérieure un volet (70) pouvant pivoter autour d'un axe placé dans sa zone supérieure entre une position de fermeture et une position d'ouverture, qui peut être maintenu en position de fermeture par un premier dispositif de verrouillage (148) pouvant être actionné au moyen d'un dispositif de déplacement (98) placé sur le réceptacle collecteur (16), le réceptacle collecteur (16) pouvant être bloqué dans sa position de réception au moyen d'un second dispositif de verrouillage et étant placé de façon à pouvoir pivoter par sa face inférieure sur un bâti (14), caractérisé en ce que le dispositif de déplacement (98) est réalisé sous la forme d'un levier (95) monté de façon à pouvoir pivoter sur le réceptacle collecteur (16), qui sert à faire pivoter le réceptacle collecteur (16) et est relié en même temps, par l'intermédiaire d'une tringlerie (100, 136, 138) à un linguet (104) placé de façon à pouvoir pivoter sur le réceptacle (16) pour le blocage du réceptacle collecteur (16) dans la position de réception de produits de récolte et à un élément de fermeture, conformé en patte de verrouillage (168), pour bloquer le volet (70) également dans la position de réception des produits de récolte.

2. Dispositif suivant la revendication 1, caractérisé en ce qu'il comporte un bâti (42) qui est placé en porte à faux sur un tracteur (10), en ce que le linguet (104) peut être amené en prise avec une patte (50) placée sur le bâti (14), et en ce que la patte de verrouillage (168) peut être amenée, en même temps que le linguet (104), dans au moins deux positions, dans l'une desquelles la patte de verrouillage (168) est maintenue dans la position de fermeture et dans la seconde desquelles le volet (70) peut passer en pivotant dans la position d'ouverture.

3. Dispositif suivant la revendication 1 ou 2, caractérisé en ce que le volet (70) peut être bloqué dans la zone de son bord inférieur au moyen de la patte de verrouillage (168)

4. Dispositif suivant une ou plusieurs des revendications précédentes, caractérisé en ce que le levier (95) est relié avec possibilité de mouvement au linguet (104) par une liaison présentant un certain jeu et est articulé par l'intermédiaire d'une tringlerie (136, 138) logée au-dessous du réceptacle collecteur (16) dans des éléments de guidage (158) au dispositif de verrouillage (148) qui est maintenu en position de fermeture au moyen d'un ressort (174, 172) pouvant être tendu au moyen du levier (95).

5. Dispositif suivant une ou plusieurs des revendications précédentes, caractérisé en ce que le réceptacle collecteur (16) est placé de manière à pouvoir pivoter sur le bâti (14) dépassant vers l'arrière du tracteur (10) de telle façon que le centre de masse du réceptacle collecteur (16) dans la position de réception de produits de récolte se trouve entre le point d'articulation du réceptacle collecteur (16) au bâti (14) et la face postérieure du tracteur (10)

6. Dispositif suivant une ou plusieurs des revendications précédentes, caractérisé en ce que le levier (95) raccordé au réceptacle collecteur (16) dans sa zone supérieure est attaqué par l'extrémité supérieure d'une tringle (100) dirigée verticalement qui comporte dans sa zone inférieure un axe de guidage (112) qui est reçu de façon à pouvoir coulisser dans un orifice de forme allongée (110) ménagé dans le linguet (104), l'extrémité inférieure de la tringle (100) étant raccordée à la tringlerie (136) s'étendant horizontalement au-dessous du réceptacle collecteur (16)

7. Dispositif suivant une ou plusieurs des revendications précédentes, caractérisé en ce que l'extrémité inférieure de la tringlerie (100) attaque une tringlerie à leviers (120, 122, 134) montée sur le réceptacle collecteur (16) qui comporte un axe d'articulation (144) qui est reçu de façon à pouvoir coulisser dans une fente de forme allongée (140) pratiquée dans la tringlerie dirigée horizontalement (136)

8. Dispositif suivant une ou plusieurs des revendications précédentes, caractérisé en ce que le dispositif de verrouillage (148) comporte des branches coudées (150, 152) qui sont articulées par une extrémité à la tringlerie horizontale (136, 138) et attaquent, par l'autre extrémité, la patte de verrouillage (168).

9. Dispositif suivant la revendication 8, caractérisé en ce qu'il est prévu au-dessous du fond du réceptacle collecteur (16) au moins un élément de guidage (158, 160) sur lequel la partie antérieure des branches (150, 152) du dispositif de verrouillage (148) raccordée la tringlerie horizontale (136, 138) est guidée de telle façon que, dans la position bloquant le volet (70), l'autre partie des branches du dispositif de verrouillage (148) peut se rapprocher en pivotant de la face inférieure du réceptacle collecteur (16) et la patte de verrouillage (168) peut être amenée dans une position d'application contre le volet (70).

10. Dispositif suivant une ou plusieurs des revendications précédentes, caractérisé en ce qu'un organe d'amortissement (176) est placé entre le bâti (42) et le réceptacle collecteur (16).

11. Dispositif suivant une ou plusieurs des revendications précédentes, caractérisé en ce que le linguet (104) comporte un crochet (108) ouvert vers le haut, qui peut être accroché dans la patte (50) prévue sur le bâti (42).

Fig. 1

Fig. 2

1

# Fig. 3

## Fig. 4

## Fig. 5